# EUROPEAN PATENT SPECIFICATION

(11) **EP 3 729 577 B1**
(45) Date of publication and mention of the grant of the patent: **06.03.2024**
(21) Application number: 18893281.8
(22) Date of filing: 13.12.2018
(51) Int. Cl.: H02G 3/22, F16L 5/02, F16L 5/10

(54) **INSERT BLOCK AND SEALING SYSTEM COMPRISING SAID INSERT BLOCK**
EINSATZBLOCK UND DICHTUNGSSYSTEM MIT DIESEM EINSATZBLOCK
BLOC D'INSERTION ET SYSTÈME D'ÉTANCHÉITÉ COMPRENANT LEDIT BLOC D'INSERTION

(30) Priority: 22.12.2017 SE 1751645
(43) Date of publication of application: 28.10.2020
(73) Proprietor: MCT Brattberg Aktiebolag, 371 92 Karlskrona (SE)
(72) Inventor: FAGERBERG, Johan, KARLSKRONA 371 45 (SE); KARLSSON, Anders, 371 92 KARLSKRONA (SE)
(74) Representative: AWA Sweden AB
(86) International application number: PCT/SE2018/051309
(87) International publication number: WO 2019/125285

(56) References cited:
- WO-A1-2015/065256
- WO-A1-2017/176203
- CN-U- 202 580 325
- CN-U- 205 319 642
- JP-A- H08 275 334
- US-A- 6 062 267
- US-A1- 2013 161 913
- US-A1- 2014 326 498

## Description

### Field of the invention

The present invention relates to an insert block for sealing around a cable, wire or pipe, and a sealing system comprising said insert block.

### Background of the invention

Within many different technical fields, like for example merchant ships, offshore platforms and buildings with content of high importance there are several safety aspects that must be considered to avoid severe damages to the content within the structure as well as peoples working in, or close to, the area in case of accidents like for example fire or leaking water or gas from the outside or within the platform, ship or building.

In case of explosion, fire or leaking water the fire and / or leaking water and gas are often spread along wires, cables or pipes and in order to stop, or at least delay, the fire, water or gas from spreading within the structure, each cable, wire or pipe must be sealed where they are lead through partition walls within the platform, ship or building.

One frequently used sealing system that provide a reliable sealing of cables, wires or pipes extending through partition walls involves a metal frame permanently installed in the partition wall to provide a passage of a predetermined size for the cables, wires or pipes in the desired area of the partition wall. The cables, wires or pipes are during installation lead through the frame. The space within the frame is during installation of the sealing system filled with insert blocks packed in layers within the frame to completely fill the space within the frame. Each insert block consists of two insert block halves each provided with a semi-circular groove in one side of the block half such that a circular passage is formed through the insert block when the two block halves are put together. Each cable, wire or pipe extending through the frame is fitted in an insert block and packed within the frame. The outside dimensions of the insert blocks are selected so that a predetermined number of insert blocks have a size corresponding to the space within the frame. After the blocks are packed side by side in layers in the intended position a pressure applying device is arranged in the top part of the frame. The pressure applying device, upon activation, applies a pressure on the blocks to press the blocks together and provide the desired sealing around the cables, wires or pipes within the frame.

For example, WO 2017/176203 A1 relates to an insert half, an insert block and the use of an insert block for sealing around a cable, pipe or wire extending through a partition wall. The insert half is used in combination with at least one insert to adapt the insert halves to cables, wires or pipes with different radius and thereby provide a reliable sealing around the periphery of the cable, wire or pipe. Document US6062267 discloses a telescopic conduit in which the cables (Element 23) can be accommodated, however it does not provide any function of sealing the circular passage when the cables are not inserted.

However, in order to make it possible to add further pipes, wires or cables extending via the frame in the partition wall, the frame preferably is selected slightly larger than actually required. The frame is then filled with insert halves without any pipe, wire or cable extending through the insert halves and in order to seal the space within the frame each groove is sealed by an insert plug fitted in the recess to close the groove. The insert plug has a radius corresponding to the radius of the groove to ensure that the groove is sealed once the pressure is applied.

Unfortunately, it has turned out that is difficult to ensure the desired sealing between the insert halves and the insert plug fitted in the groove due to deformations in the elastic insert halves and insert plug when the pressure is applied to seal the space within the frame.

There is consequently a need for improvements to ensures the desired sealing between adjacent insert halves and insert plugs fitted to seal the insert blocks not fitted around any pipe, wire or cable.

### Summary of the invention

The present invention, defined in the appended claims, relates to an insert block for sealing around a cable, pipe or wire that to at least some extent fulfils the need defined above.

The insert block according to the invention comprises:
two substantially identical insert halves each comprising:
an insert half body with a first and a second end, a first side, and a groove with a semi-circular shape arranged in said first side and extending between the first and second end along an axis A, wherein the insert halves are intended to be arranged with first sides adjacent to each other such that a substantially circular passage is formed through the insert block; and
an insert plug arranged in the substantially circular passage to seal the passage, said insert plug comprises at least a section along axis A that has a circular cross section with a radius corresponding to the radius of the passage, characterized in that said insert plug comprises at least two insert plug elements movably connected to each other such that the length of the insert plug along axis A is adjustable.

The general idée with the present invention is to improve the sealing of the passage through the insert block when no cable, wire or pipe is lead through the insert block. This is achieved by the insert plug with adjustable length that is able to extend together with the insert block when a pressure is applied on the insert blocks within a frame in the partition wall to seal the space within the frame. In order to seal the space within the frame a considerable pressure is applied that deforms the insert blocks. The insert plug according to the invention turned out to improve the sealing of the passage through the insert block since the insert plug adapts to the extension along axis A of the insert block.

In one embodiment of the insert block according to the invention, the insert plug has a length along axis A that is adjustable within the range from substantially equal to the distance between the first and second end of the insert block halves to a length exceeding the distance between the first and second end of the insert block halves. This embodiment provides the desired adjustability of the insert plug since the insert plug will extend along the entire passage before any pressure is applied on the insert block and extend together with the insert block when the pressure is applied.

In one embodiment of the insert block according to the invention, the insert block halves are made of elastic material and the at least two insert plug elements are made of a less elastic material than the insert halves. This embodiment further improves the sealing of the passage since the insert plug formed of a less elastic material than the insert block will provide the intended shape and seal the passage instead of being deformed.

In one embodiment of the insert block according to the invention, the at least one of the at least two insert plug elements are made of a non-elastic material. This embodiment improves the sealing since the insert plug not will be deformed when a pressure is applied.

In one embodiment of the insert block, the at least two insert plug elements are connected by a male / female configuration such that the length along axis A is adjustable, and said section of the plug that has a circular cross section with a radius corresponding to the radius of the passage extend across the at least two insert plug elements. This embodiment provides a reliable fitting of the at least two insert plug elements to each other and the desired adjustability of the length.

In one embodiment of the insert block, the insert plug has a first end and a second end and comprises a first flange arranged in the first end and extending in radial direction from axis A and a second flange arranged in the second end and extending in radial direction from the axis A, said flanges has a radius exceeding the radius of the circular passage formed in the insert block such that the first and second flange are supported against the first and second end surfaces of the insert halves. This embodiment of the inset plug is advantageous since the flanges ensures that the insert plug will expand together with the insert block when the pressure is applied on the insert blocks within the frame.

In one embodiment of the insert block, a number of substantially identical recesses extending substantially transverse to axis A are formed in the groove in the two insert halves, and each of said insert half furthermore comprises at least one insert removably arranged within said groove, said insert is formed by at least two elements bonded to each other side by side and are extending substantially transverse to axis A, wherein said inserts have an outside shape corresponding to the shape of the groove and the recesses such that the insert could be arranged anywhere along the groove, wherein each element comprises a semi-circular inside surface with different radius such that a passage with different radius co-axial to axis A is formed to adapt the radius of the passage through said insert block, and the sealing plug is arranged to seal the passage formed by the at least one insert in each insert block half.

In one embodiment of the insert block, the width of the recesses along axis A correspond to the width of one element such that one element fit in one recess.

In one embodiment of the insert block, the insert comprises the same number of elements as the number of recesses in the insert halves.

In one embodiment of the insert block, the insert block comprises two inserts in each insert half, one insert is arranged adjacent to the first end of the insert half and the other insert is arranged adjacent to the second end of the insert block, and the section of the plug that has a circular cross section with a radius corresponding to the radius of the passage is arranged between the two inserts

In one embodiment of the insert block, the insert plug has a first end and a second end and comprises a first flange arranged in the first end and extending in radial direction from axis A and a second flange arranged in the second end and extending in radial direction from the axis A, said flanges has a radius corresponding to the radius of the circular passage formed by the at least one insert or a radius corresponding to the radius of the recesses formed in the groove such that the passage through the insert is sealed by the insert plug. This embodiment of the inset plug is advantageous since the flanges ensures that the insert plug will expand together with the insert block when the pressure is applied on the insert blocks within the frame.

In one embodiment of the insert block, the length of the insert plug along axis A is adjustable to such that the first and / or second flange fit in the recesses adjacent to the first and second end of the insert block halves or between adjacent elements of the at least one insert arranged within the groove of the insert halves.

Use of at least one insert block according to the definition above in a metal frame fitted in a partition wall for sealing for sealing the space within the frame.

The present invention furthermore relates to a sealing system comprising:
a frame arranged in a partition wall;
at least one insert block according to claim 1 arranged within the frame; and a pressure applying device arranged within the frame to apply a pressure on the at least one insert block to seal the space within the frame.

The claimed sealing system provides improved sealing of the space within the frame since the new insert block provides a more efficient sealing of the insert block when no cable, wire or pipe is fitted in the insert block which happens frequently since the frame preferably is selected slightly larger than the present need to make room for future additional installations of cables, wires or pipes.

The different embodiment described above could of course be combined and modified in different ways without departing from the scope of the invention that will be described more in detail in the detailed description.

### Brief description of the drawings

Different embodiments of the insert block according to the invention are illustrated in the appended figures.
Figure 1 illustrates schematically a perspective view of a sealing system comprising a rectangular frame and insert blocks according to the invention.
Figure 2 illustrates at perspective view of a sealing system comprising a circular frame.
Figure 3a illustrates an exploded perspective view of a first embodiment of an insert half body and an insert plug.
Figure 3b illustrates a top view of the insert half body in figure 3a.
Figure 4a and 4b illustrates a cross sectional view of the insert plug along axis A.
Figure 5a illustrates an exploded perspective view of a second embodiment of an insert half body, an insert and an insert plug.
Figure 5b illustrates a perspective view the insert half body, the insert and the insert plug in figure 5a assembled.
Figure 6a illustrates an exploded perspective view of a third embodiment of an insert half body, two inserts and an insert plug.
Figure 6b illustrates a perspective view the insert half body, the inserts and the insert plug in figure 6a assembled.
Figure 7a illustrates an exploded perspective view of a fourth embodiment of an insert half body, an inserts and an insert plug.
Figure 7b illustrates a perspective view the insert half body, the insert and the insert plug in figure 7a assembled.

### Detailed description

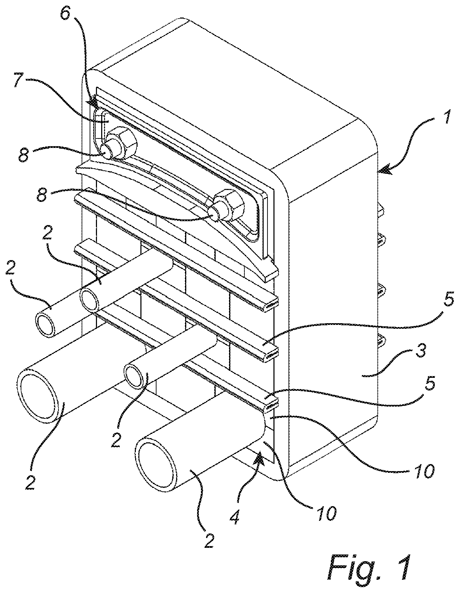

In figure 1 a sealing system 1 for sealing of cables 2, wires or pipes extending through a not illustrated partition wall is illustrated. The system involves a metal frame 3 intended to be permanently installed in the partition wall to provide a passage of a predetermined size in the partition wall. The cables, wires or pipes that need to pass through the partition wall are during installation lead through the frame.

In order to seal the space within the frame an insert block 4, comprising two substantially identical insert block halves 10, is fitted around each of the cables, wires or pipes extending through the frame. The insert blocks, and the cable, wire or pipe extending through the insert block, are packed in layers within the frame to completely fill the space within the frame. The insert blocks have substantially square cross sectional shape and the outside dimensions of the insert blocks are selected so that a predetermined number of insert blocks have a size corresponding to the space within the frame to fill the space within the frame and provide the desired sealing of the passage in the partition wall. The different layers of insert blocks are separated by a guiding metal plate 5 in order to ensure that the layers remain in the intended position within the frame 3 when pressure is applied on the sealing system. If the number of cables, wires or pipes is less than the number of insert blocks required to fill the space within the frame, the insert blocks could be replaced by a solid elastic rectangular block to fill the remaining spaces within the frame alternatively an insert block according to the present invention could be used. The insert block according to the invention is described in more detail further down in the description.

After the blocks are packed side by side in layers in the intended position within the frame a pressure applying device 6 is arranged in the top part of the frame. The pressure applying device comprises a plate 7 arranged on each side of an elastic member and threaded shafts 8 extending through the elastic member. When the elastic member is compressed between the plates by the shafts and nuts arranged on the shaft the elastic element expand such that a pressure is applied on the layer packed within the frame 3 thereby eliminating gaps between the insert blocks and sealing the space within the frame. Different types of pressure applying devices are available and the described device could be replaced by anyone of the available devices.

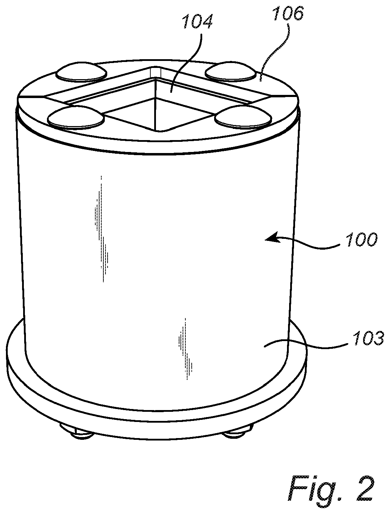

A second embodiment of a sealing system 100 is illustrated in figure 2. In this embodiment the rectangular frame is replaced by a circular metal frame 103 intended to be permanently installed in the partition wall. In this embodiment the pressure applying device 103 is arranged around the inner periphery of the frame. In the pressure applying device a rectangular opening 104 is formed for the insert block, or insert blocks, such that the pressure applying device is enclosing the insert block or insert blocks and cables. The above described insert blocks are fitted around the cables, wires and pipes and arranged within the opening in the pressure applying device such that the opening is filled completely before pressure is applied and the space within the frame is sealed.

### First embodiment

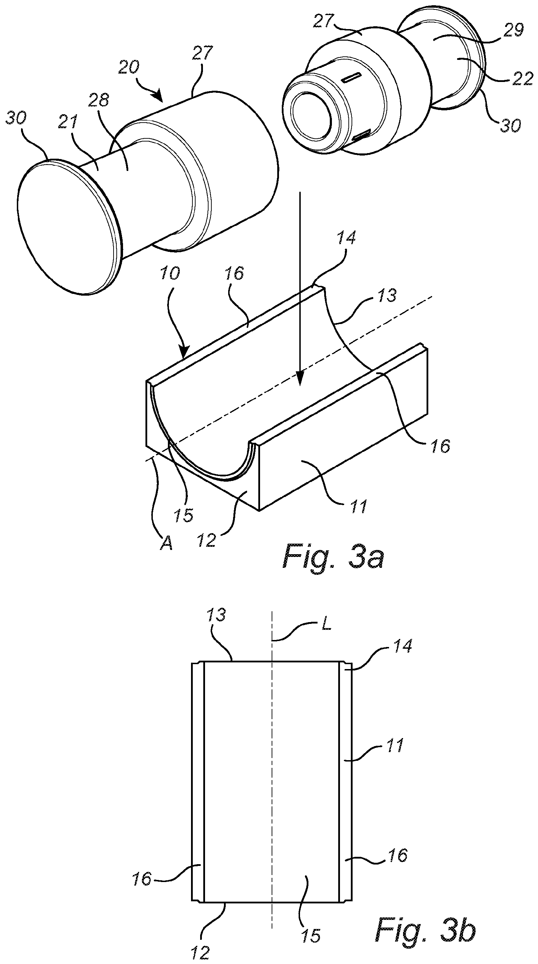

An exploded view of a first embodiment of selected parts of an insert block according to the invention is illustrated in figure 3a and 3b. Each insert block comprises two identical insert halves 10, only one is illustrated in the figures to more clearly illustrate the different parts. Each insert half 10 comprises a rectangular insert half body 11 illustrated in figure 3a and 3b. The body 11 has a first end surface 12 and a second end surface 13 arranged on the opposite side of the rectangular body. In one of the substantially flat sides 14, extending from the first to the second end, a semi-circular groove 15 is formed in the body such that a circular passage is generated through the insert block when two identical block halves are arranged together with the grooves 15 and flat sides 14 of each insert block half facing each other.

The longitudinal central axis A of the semi-cylindrical groove is arranged parallel to the flat side 14 of the body, as well as coaxial with a longitudinal central axis of the insert block formed of two identical insert halves 10. The diameter of the semi-cylindrical groove is smaller than the width of the insert body so that an elongated contact surface 16 is formed along each side of the groove 15. The contact surfaces 16 of two adjacent insert block halves will be in contact with each other thereby enclosing a cable, wire or pipe arranged in the groove.

The body 11 is made of a pressure, water and heat resistant elastic rubber composition adapted to the specific demands on this type of sealing systems. The dimensions of the insert block half are preferably selected so that the insert block will have a square cross sectional shape, but other shapes could be used as long at the size of the insert blocks correspond to the dimensions of the frame in the partition wall.

The insert block furthermore comprises an insert sealing plug 20 intend to close the passage when no cable, wire or pipe is extending through the insert block. The insert plug is illustrated in figure 3a. The insert plug 20 comprises two insert plug elements 21, 22 movably connected to each other such that the length of the insert plug along axis A is adjustable.

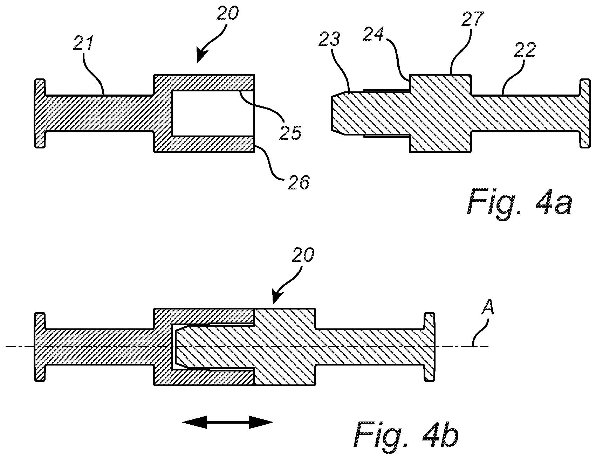

The two insert plug elements 21, 22 are movably fitted to each other by a male/female configuration illustrated in figure 4a and 4b. One of the insert plug elements 22 comprises a circular protrusion 23 extending in axial direction from a side 24 of the insert plug element intended to be facing a corresponding side on the adjacent insert plug element 21, and the other insert plug element 21 comprises a corresponding circular recess 25 formed in a side 26 of the insert plug element intended to be facing the corresponding side on the other insert plug element. The circular protrusion 23 is fitted in the circular recess 25 such that the two insert plug elements are movable in relation to each other along the axial direction A to adjust the axial length of the insert plug. The cross sectional shape of the male/female configuration could however be modified as long as the first and second insert plug element fit together and provide the desired movability along axis A.

The insert plug has a central circular section 27 with a radius corresponding to the radius of the groove 15 to seal the passage, and adjacent first 28 and second section 29 with a smaller radius arranged on opposite sides of the central section 27. The axial length of the central section could be modified. In the illustrated embodiment the central section extends across both the first 21 and second 22 insert plug element but this is not necessary to ensure the desired function of insert plug.

The first and second section extend to the respective ends of the insert half body such that the length of the insert plug corresponds to the length along axis A of the insert half body. In the first and second end of the insert plug a flange 30 extend in radial direction from axis A. The flanges are intended to be arranged adjacent to the first and second end surface of the insert half bodies such that the insert plug elements are forced to move together with the insert block body when the pressure is applied within the frame to seal the space within the frame and the insert blocks are forced to expand along the axial direction A. Alternatively, the length of the insert plug is reduced and the flanges arranged within the groove close to the respective end surface of the insert half bodies. The flange then has a radius corresponding to the radius of the groove.

The insert plug could also be modified such that the central section is extended all the way to the side surfaces of the insert block. The first and second section as well as the flanges are then consequently not needed.

### Embodiment 2

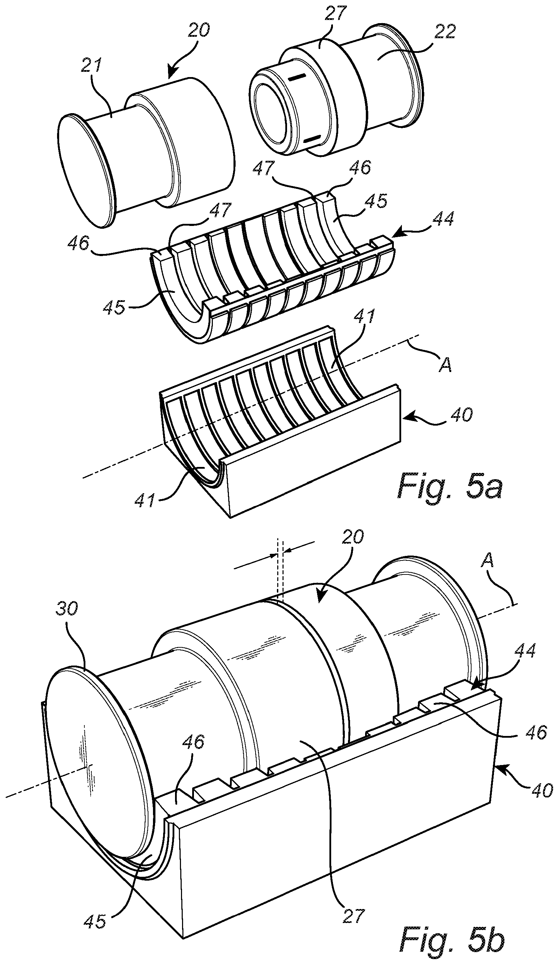

In figure 5a and 5b a second embodiment of an insert block according to the invention is illustrated. In this embodiment of the insert block, the insert half body 40 is identical to the previously described embodiment of the insert half body but along the groove 15, a number of recesses 41 extending substantially transverse to the axis A are formed in the groove. In the illustrated embodiment the number of recesses 41 is ten, but the actual number could be both higher and smaller. All the recesses have the same width along the groove and a substantially uniform shape. The recesses are arranged side by side along the entire groove such that the groove will have an undulating shape. Each insert half furthermore comprises at least one insert 44 intended to be arranged within the groove 15.

The general idée with the at least one insert 44 arranged within the groove 15 is to make it possible to adapt the size, i.e. the radius, of the passage through the insert block. A first embodiment of the insert 44 is illustrated in figure 5a and 5b. The insert 44 is formed by at least two elements. However, the illustrated insert comprises ten elements 45. The elements 45 are arranged side by side along axis A, and bonded to each other. Each element 45 has the shape of a half-circular arc with an outer peripheral shape and dimension corresponding to the shape and dimension of the recesses 41 in the groove 15 such that the insert could be arranged and maintained in the groove anywhere along the groove.

In each element 45 of the insert 44 a semi-circular passage co-axial to axis A is formed such that a circular passage is formed when to identical inserts 44 arranged in the two insert halves are fitted together with the grooves 15 of the insert halves facing each other. In the end of each element an end surface 46 is formed that will be in contact with the end surface 46 of a corresponding element 45 of a second insert half.

The semi-circular passage formed by the different elements 45 have different radius such that different elements 45 will fit cables, wires or pipes with different radius. During the installation of the sealing system, the elements 45 with a semi-circular passage not corresponding to the cable, wire or pipe are teared from the insert 44 to only maintain the elements 45 with the desired radius such that the passage thereby is adapted to the particular cable, wire or pipe.

The number of elements 45 of the insert is either less than the number of recesses in the insert half bodies 40, equal to the number of recesses 41 or larger than the number of recesses depending on the desired number of different radiuses the insert 44 is intended to be used for.

The embodiment of the insert block illustrated in figure 5a and 5b comprises ten elements each having a semi-circular passage with different radius. The different elements 45 of the inserts 44 are bounded to each other side by side. The bounding 47 is preferably thin to facilitate removal of selected elements 45 to adapt the insert to the specific cable, wire or pipe.

The different elements 45 of the inserts are arranged such that the two elements with the smallest radius of the semi-circular passages are arranged in opposite ends of the insert, the element with the third smallest radius is arranged adjacent to the element with the smallest radius on the side of the element that is facing the element with the second smallest radius, the element with the fourth smallest radius is arranged adjacent to the element with the second smallest radius on the side facing the element with the smallest radius and the remaining elements are arranged correspondingly in alternating ends of the insert adjacent to the elements with smaller radius.

The illustrated and described configuration of the different elements forming the insert generates a larger space within the centre of the insert block that makes it possible to use an insert plug 20 with many similarities to the insert plug described above to seal the passage through the insert block.

The insert plug 20 in this embodiment comprises two insert plug elements 21, 22 movably connected to each other by a male/female configuration. The insert plug has the central circular section 27 with a length along the axial direction A selected in combination with a suitable radius such that the central section fit in the space formed in the centre of the insert block. The radius of the central circular section is selected to correspond to the radiuses of the passage formed by two of the elements in the area close to the centre of the insert block where the central circular section is arranged when the insert plug is fitted in the insert block. The central circular section of the insert half should provide a tight fitting with two of the elements to seal the passage.

Also in this embodiment the insert plug comprises adjacent first and second section with a smaller radius arranged on opposite sides of the central section. The radius of the first and second section must be smaller, or equal, to the smallest radius of the elements in the insert in the area of the first and second section to make it possible to fit the insert plug in the insert block.

The axial length of the central section could be modified as long as its radius correspond to the smallest radius along the extension of the central section to make it possible to fit the insert plug in the insert block.

The first and second section extend to the respective ends of the insert half body such that the length of the insert plug corresponds to the length of the insert half body. In the first and second end of the insert plug a flange extend in radial direction from axis A. The flanges have a slightly larger radius than the elements in the area of the flanges such that first and second flange provide a tight sealing in the respective end of the passage formed by the inserts. The first and second flange are preferably arranged close to the first and second end surface of the insert block. The first and second insert plug element are forced to move together with the insert block body and the inserts when the pressure is applied within the frame to seal the space within the frame.

### Embodiment 3

In order to ensure a reliable configuration of the insert in the groove of the insert half body, the insert always comprises at least two elements to be maintained in an effective way within the recesses of the groove. If the insert illustrated in figure 5a and 5b is used, one of the elements is the one that correspond exactly to the present cable, wire or pipe and the second one the element that has a passage that is slightly larger than the present cable, wire or pipe.

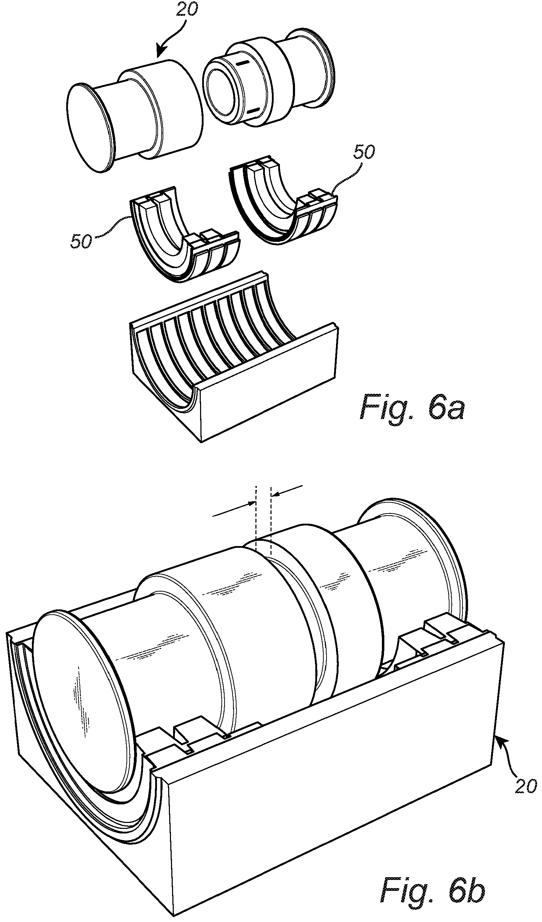

Preferably each insert half comprises at least two inserts arranged adjacent to the respective end surfaces of the insert half body to seal the cable, wire or pipe at two different locations along the cable, wire or pipe. This configuration is illustrated in figure 6a and 6b.

If the insert illustrated in figure 5a and 5b is used, the insert during installation is torn to form two inserts that preferably are arranged in each end of the groove to provide two sealing positions along the groove. The genius design of the insert 44 comprising a number of elements arranged such that the two elements with adjacent radius of the semi-circular passage are arranged in alternating ends of the insert make it possible to tear the insert so that the element which will provide the perfect fit and the adjacent element could be arranged in one end the groove, and the element slightly larger and the thereto adjacent element are arranged in the opposite end of the groove. The sealing system formed by this insert half provide a reliable sealing around the cable, wire or pipe once pressure is applied by the pressure applying device since sealing is provided at two different positions along the cable, wire or pipe. This is illustrated in figure 6a and 6b.

Alternatively, two separate substantially identical inserts comprising the desired number of elements are manufactured an arranged in the respective ends of the groove could be used.

The illustrated and described configuration of the two inserts 50 generates a larger space within the centre of the insert block. In this embodiment the passage in the centre of the insert block is formed by the groove 15 in the insert half body 50 and consequently has a constant radius between the two inserts.

The insert plug 20 also in this embodiment comprises two insert plug elements 21, 22 movably connected to each other by a male/female configuration. The insert plug has a central circular section with a length along the axial direction A selected such that the central section fit in the space formed between the two inserts. The radius of the central circular section is selected to correspond to the radius of the groove in the insert half bodies. The central circular section of the insert half should provide a tight fitting to the groove to seal the passage.

Also in this embodiment the insert plug comprises adjacent first and second section with a smaller radius arranged on opposite sides of the central section. The radius of the first and second section must be smaller, or equal, to the smallest radius of the elements in the two inserts to make it possible to fit the insert plug in the insert block. The axial length of the central section could be modified as long as it fit between the inserts in the insert block halves.

The first and second section extend to the respective ends of the insert half body such that the length of the insert plug corresponds to the length of the insert half body. In the first and second end of the insert plug a flange extend in radial direction from axis A. The flanges have a slightly larger radius than the elements in the area of the flanges such that first and second flange provide a tight sealing in the respective end of the passage formed by the two inserts. The first and second flange are preferably arranged close to the first and second end surface of the insert block. The first and second insert plug element are forced to move together with the insert block body and the inserts when the pressure is applied within the frame to seal the space within the frame.

### Embodiment 4

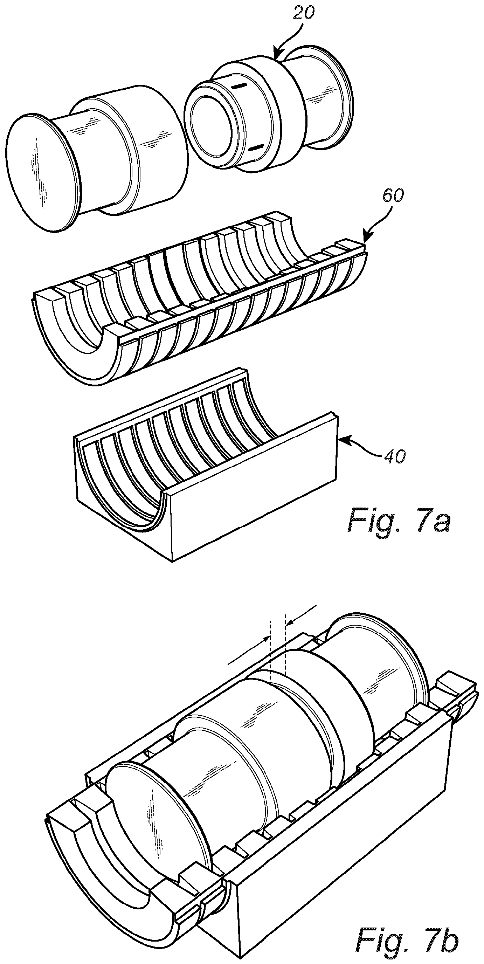

A further embodiment of the inset block according to the invention is illustrated in figure 7a and 7b.

The insert half body is identical to as the previously described embodiment comprising recesses 41 in the groove. In this embodiment, the inset 60 comprises fourteen different elements 61 to further increase the alternative radiuses the insert could be adapted to, and since the number of elements 61 exceed the number of recesses 41 in the groove the insert will extend outside the insert block. However, the design of the insert plug 20 and the position within the insert block halves is identical to the previously described embodiments, i.e. the flanges of the insert plug are located close to the end surfaces of the insert half bodies between adjacent elements of the insert.

Furthermore, the embodiments described above could all be combined and modified in different ways without departing from the scope of the invention that is defined by the appended claims. For example, the shape of the insert plug, the insert and the elements could be modified as long as the insert plug, the inserts and recesses in the groove correspond to each other and provide the desired sealing of the cables, wires and pipes extending through the frame in the partition wall.

## Claims

1. Insert block (4) for sealing around a cable (2), pipe or wire, said insert block comprising:
two substantially identical insert halves (10) each comprising:
an insert half body (11; 40) with a first (12) and a second end (13), a first side (14), and a groove (15) with a semi-circular shape arranged in said first side and extending between the first and second end along an axis A, wherein the insert halves are intended to be arranged with first sides adjacent to each other such that a substantially circular passage is formed through the insert block; and
an insert plug (20) arranged in the substantially circular passage to seal the passage, said insert plug comprises at least a section (27) along axis A that has a circular cross section with a radius corresponding to the radius of the passage,
**characterized in that**
said insert plug comprises at least two insert plug elements (21, 22) movably connected to each other such that the length of the insert plug along axis A is adjustable.

2. Insert block according to claim 1, wherein the insert plug has a length along axis A that is adjustable within the range from substantially equal to the distance between the first and second end of the insert block halves to a length exceeding the distance between the first and second end of the insert block halves.

3. Insert block according to claim 1 or 2, wherein the insert block bodies are made of elastic material and the at least two insert plug elements are made of a less elastic material than the insert block bodies.

4. Insert block according to anyone of the previous claims, wherein the at least two insert plug elements are made of a non-elastic material.

5. Insert block according to anyone of the previous claims, wherein the at least two insert plug elements are connected by a male / female configuration such that the length along axis A is adjustable, and said section of the plug that has a circular cross section with a radius corresponding to the radius of the passage extend across the at least two insert plug elements.

6. Insert block according to anyone of the previous claims, wherein the insert plug has a first end and a second end and comprises a first flange (30) arranged in the first end and extending in radial direction from axis A and a second flange (30) arranged in the second end and extending in radial direction from the axis A, said flanges has a radius exceeding the radius of the circular passage formed in the insert block such that the first and second flange are supported against the first and second end surfaces of the insert halves.

7. Insert block according to claim 1, wherein a number of substantially identical recesses (41) extending substantially transverse to axis A are formed in the groove in the two insert halves, and each of said insert half furthermore comprises least one insert (44; 50; 60) removably arranged within said groove, said insert is formed by at least two elements (45) bonded to each other side by side and are extending substantially transverse to axis A, wherein said inserts have an outside shape corresponding to the shape of the groove and the recesses such that the insert (44; 50; 60) could be arranged anywhere along the groove, wherein each element comprises a semi-circular inside surface with different radius such that a passage with different radius co-axial to axis A is formed to adapt the radius of the passage through said insert block, and the sealing plug is arranged to seal the passage formed by the at least one insert in each insert block half.

8. Insert block according to claim 7, wherein the width of the recesses along axis A correspond to the width of one element such that one element fit in one recess.

9. Insert block according to claim 7 or 8, wherein the insert (44) comprises the same number of elements as the number of recesses in the insert halves.

10. Insert block according to claim 7 or 8, wherein the insert block comprises two inserts (50) in each insert half, one insert is arranged adjacent to the first end of the insert half and the other insert is arranged adjacent to the second end of the insert block, and the section of the plug that has a circular cross section with a radius corresponding to the radius of the passage is arranged between the two inserts

11. Insert block according to anyone of claims 7 to 10, wherein the insert plug (20) has a first end and a second end and comprises a first flange (30) arranged in the first end and extending in radial direction from axis A and a second flange (30) arranged in the second end and extending in radial direction from the axis A, said flanges has a radius corresponding to the radius of the circular passage formed by the at least one insert or a radius corresponding to the radius of the recesses formed in the groove such that the passage through the insert is sealed by the insert plug.

12. Insert block according to claim 11, wherein the length of the insert plug along axis A is adjustable to such that the first and / or second flange fit in the recesses adjacent to the first and second end of the insert block halves or between adjacent elements of the at least one insert arranged within the groove of the insert halves.

13. Sealing system (1) comprising:
a frame (3) arranged in a partition wall;
at least one insert block (4) according to claim 1 arranged within the frame;
and a pressure applying device arranged within the frame to apply a pressure on the at least one insert block to seal the space within the frame.

## Patentansprüche

1. Einsatzblock (4) zum Abdichten um ein Kabel (2), ein Rohr oder einen Draht, wobei der Einsatzblock umfasst:
zwei im Wesentlichen identische Einsatzhälften (10), die jeweils umfassen:
einen Einsatzhalbkörper (11; 40) mit einem ersten (12) und einem zweiten Ende (13), einer ersten Seite (14) und einer Nut (15) mit einer halbkreisförmigen Form, die in der ersten Seite angeordnet ist und sich zwischen dem ersten und dem zweiten Ende entlang einer Achse A erstreckt, wobei die Einsatzhälften dazu ausgelegt sind, mit ersten Seiten benachbart zueinander derart angeordnet zu sein, dass ein im Wesentlichen kreisförmiger Durchgang durch den Einsatzblock gebildet ist; und
einen Einsatzstopfen (20), der in dem im Wesentlichen kreisförmigen Durchgang angeordnet ist, um den Durchgang abzudichten, wobei der Einsatzstopfen mindestens einen Abschnitt (27) entlang der Achse A umfasst, der einen kreisförmigen Querschnitt mit einem Radius aufweist, der dem Radius des Durchgangs entspricht,
**dadurch gekennzeichnet, dass**
der Einsatzstopfen mindestens zwei Einsatzstopfenelemente (21, 22) umfasst, die derart beweglich miteinander verbunden sind, dass die Länge des Einsatzstopfens entlang der Achse A einstellbar ist.

2. Einsatzblock nach Anspruch 1, wobei der Einsatzstopfen eine Länge entlang der Achse A aufweist, die innerhalb des Bereichs von im Wesentlichen gleich dem Abstand zwischen dem ersten und dem zweiten Ende der Einsatzblockhälften bis zu einer Länge, die den Abstand zwischen dem ersten und dem zweiten Ende der Einsatzblockhälften übersteigt, einstellbar ist.

3. Einsatzblock nach Anspruch 1 oder 2, wobei die Einsatzstopfenkörper aus elastischem Material hergestellt sind und die mindestens zwei Einsatzstopfenelemente aus einem weniger elastischen Material als die Einsatzstopfenkörper hergestellt sind.

4. Einsatzblock nach einem der vorhergehenden Ansprüche, wobei die mindestens zwei Einsatzstopfenelemente aus einem nicht-elastischen Material hergestellt sind.

5. Einsatzblock nach einem der vorhergehenden Ansprüche, wobei die mindestens zwei Einsatzstopfenelemente durch eine Stecker/Buchse-Konfiguration derart eingerichtet sind, dass die Länge entlang der Achse A einstellbar ist, und der Abschnitt des Stopfens, der einen kreisförmigen Querschnitt mit einem Radius aufweist, der dem Radius des Durchgangs entspricht, sich über die mindestens zwei Einsatzstopfenelemente erstreckt.

6. Einsatzblock nach einem der vorhergehenden Ansprüche, wobei der Einsatzstopfen ein erstes Ende und ein zweites Ende hat und einen ersten Flansch (30) umfasst, der in dem ersten Ende angeordnet ist und sich in radialer Richtung von der Achse A erstreckt, und einen zweiten Flansch (30), der in dem zweiten Ende angeordnet ist und sich in radialer Richtung von der Achse A erstreckt, wobei die Flansche einen Radius aufweisen, der den Radius des kreisförmigen Durchgangs, der in dem Einsatzblock gebildet ist, derart übersteigt, dass der erste und der zweite Flansch gegen die erste und die zweite Endfläche der Einsatzhälften abgestützt sind.

7. Einsatzblock nach Anspruch 1, wobei eine Anzahl von im Wesentlichen identischen Vertiefungen (41), die sich im Wesentlichen quer zur Achse A erstrecken, in der Nut in den beiden Einsatzhälften gebildet ist und jede der Einsatzhälften ferner mindestens einen Einsatz (44; 50; 60) umfasst, der entfernbar innerhalb der Nut angeordnet ist, wobei der Einsatz durch mindestens zwei Elemente (45) gebildet ist, die Seite an Seite aneinander gebunden sind und sich im Wesentlichen quer zur Achse A erstrecken, wobei die Einsätze eine Außenform aufweisen, die der Form der Nut und der Vertiefungen derart entspricht, dass der Einsatz (44; 50; 60) an beliebiger Stelle entlang der Nut angeordnet sein könnte, wobei jedes Element eine halbkreisförmige Innenfläche mit unterschiedlichem Radius umfasst, sodass ein Durchgang mit unterschiedlichem Radius koaxial zur Achse A gebildet ist, um den Radius des Durchgangs durch den Einsatzblock anzupassen, und der Dichtungsstopfen angeordnet ist, um den Durchgang abzudichten, der durch den mindestens einen Einsatz in jeder Einsatzblockhälfte gebildet ist.

8. Einsatzblock nach Anspruch 7, wobei die Breite der Vertiefungen entlang der Achse A der Breite eines Elements derart entspricht, dass ein Element in eine Vertiefung passt.

9. Einsatzblock nach Anspruch 7 oder 8, wobei der Einsatz (44) die gleiche Anzahl von Elementen umfasst wie die Anzahl von Vertiefungen in den Einsatzhälften.

10. Einsatzblock nach Anspruch 7 oder 8, wobei der Einsatzblock zwei Einsätze (50) in jeder Einsatzhälfte umfasst, ein Einsatz benachbart zu dem ersten Ende der Einsatzhälfte angeordnet ist und der andere Einsatz benachbart zu dem zweiten Ende des Einsatzblocks angeordnet ist, und der Abschnitt des Stopfens, der einen kreisförmigen Querschnitt mit einem Radius aufweist, der dem Radius des Durchgangs entspricht, zwischen den beiden Einsätzen angeordnet ist.

11. Einsatzblock nach einem der Ansprüche 7 bis 10, wobei der Einsatzstopfen (20) ein erstes Ende und ein zweites Ende hat und einen ersten Flansch (30) umfasst, der in dem ersten Ende angeordnet ist und sich in radialer Richtung von der Achse A erstreckt, und einen zweiten Flansch (30), der in dem zweiten Ende angeordnet ist und sich in radialer Richtung von der Achse A erstreckt, wobei die Flansche einen Radius aufweisen, der dem Radius des kreisförmigen Durchgangs entspricht, der durch den mindestens einen Einsatz gebildet ist, oder einen Radius, der dem Radius der Vertiefung entspricht, die in der Nut gebildet ist, sodass der Durchgang durch den Einsatz durch den Einsatzstopfen abgedichtet ist.

12. Einsatzblock nach Anspruch 11, wobei die Länge des Einsatzstopfens entlang der Achse A derart einstellbar ist, dass der erste und/oder der zweite Flansch in die Vertiefungen benachbart zu dem ersten und dem zweiten Ende der Einsatzblockhälften oder zwischen benachbarte Elemente des mindestens einen Einsatzes passen, die innerhalb der Nut der Einsatzblockhälften angeordnet sind.

13. Dichtungssystem (1), umfassend:
einen Rahmen (3), der in einer Trennwand angeordnet ist;
mindestens einen Einsatzblock (4) nach Anspruch 1, der innerhalb des Rahmens angeordnet ist;
und eine Druckausübungsvorrichtung, die innerhalb des Rahmens angeordnet ist, um einen Druck auf den mindestens einen Einsatzblock auszuüben, um den Raum innerhalb des Rahmens abzudichten.

## Revendications

1. Bloc d'insertion (4) destiné à assurer l'étanchéité autour d'un câble (2), d'un tuyau ou d'un fil, ledit bloc d'insertion comprenant :
deux moitiés d'insert (10) substantiellement identiques comprenant respectivement :
un corps de moitié d'insert (11 ; 40) avec une première (12) et une deuxième extrémité (13), un premier côté (14), et une rainure (15) de forme semi-circulaire agencée dans ledit premier côté et s'étendant entre les première et deuxième extrémités le long d'un axe A, dans lequel les moitiés d'insert sont destinées à être agencées avec des premiers côtés adjacents l'un à l'autre de manière à former un passage substantiellement circulaire à travers le bloc d'insertion ; et
un bouchon d'insert (20) agencé dans le passage substantiellement circulaire pour étanchéifier le passage, ledit bouchon d'insert comprenant au moins une section (27) le long de l'axe A, laquelle présente une section transversale circulaire avec un rayon correspondant au rayon du passage,
**caractérisé en ce que**
ledit bouchon d'insert comprend au moins deux éléments de bouchon (21, 22) reliés de façon mobile l'un à l'autre de telle façon que la longueur du bouchon d'insert le long de l'axe A est réglable.

2. Bloc d'insertion selon la revendication 1, dans lequel le bouchon d'insert présente une longueur le long de l'axe A, laquelle est réglable dans la plage allant substantiellement égale à la distance entre les première et deuxième extrémités des moitiés de bloc d'insertion à une longueur dépassant la distance entre les première et deuxième extrémités des moitiés de bloc d'insertion.

3. Bloc d'insertion selon la revendication 1 ou 2, dans lequel les corps de bloc d'insertion sont constitués d'une matière élastique et les au moins deux éléments de bouchon d'insert sont constitués d'une matière moins élastique que les corps de bloc d'insertion.

4. Bloc d'insertion selon l'une quelconque des revendications précédentes, dans lequel les au moins deux éléments de bouchon d'insert sont constitués d'une matière non élastique.

5. Bloc d'insertion selon l'une quelconque des revendications précédentes, dans lequel les au moins deux éléments de bouchon d'insert sont raccordés par une configuration mâle/femelle de telle sorte que la longueur le long de l'axe A est réglable, et ladite section du bouchon présentant une section transversale circulaire avec un rayon correspondant au rayon du passage s'étend à travers les au moins deux éléments de bouchon d'insert.

6. Bloc d'insertion selon l'une quelconque des revendications précédentes, dans lequel le bouchon d'insert présente une première extrémité et une deuxième extrémité et comprend un premier rebord (30) agencé dans la première extrémité et s'étendant dans une direction radiale à partir de l'axe A et un deuxième rebord (30) agencé dans la deuxième extrémité et s'étendant dans une direction radiale à partir de l'axe A, lesdits rebords présentant un rayon dépassant le rayon du passage circulaire formé dans le bloc d'insertion de telle façon que les premier et deuxième rebords s'appuient contre les première et deuxième surfaces d'extrémité des moitiés d'insert.

7. Bloc d'insertion selon la revendication 1, dans lequel un nombre de cavités (41) substantiellement identiques s'étendant substantiellement transversalement à l'axe A sont formées dans la rainure dans les deux moitiés d'insert, et chacune desdites moitiés d'insert comprend en outre au moins un insert (44 ; 50 ; 60) agencé de façon amovible dans ladite rainure, ledit insert est formé par au moins deux éléments (45) collés l'un à l'aitre côte à côte et s'étendant substantiellement transversalement à l'axe A, dans lequel lesdits inserts présentent une forme extérieure correspondant à la forme de la rainure et des cavités de sorte que l'insert (44 ; 50 ; 60) pourrait être agencé à n'importe quel endroit le long de la rainure, dans lequel chaque élément comprend une surface intérieure semi-circulaire avec un rayon différent de sorte qu'un passage avec différents rayons coaxial à l'axe A est formé de manière à adapter les rayons du passage à travers ledit bloc d'insertion, et le bouchon d'insert est agencé de manière à étanchéifier le passage formé par l'au moins un insert dans chaque moitié de bloc d'insertion.

8. Bloc d'insertion selon la revendication 7, dans lequel la largeur des cavités le long de l'axe A correspond à la largeur d'un élément de sorte qu'un élément s'ajuste dans une cavité.

9. Bloc d'insertion selon la revendication 7 ou 8, dans lequel l'insert (44) comprend le même nombre d'éléments que le nombre de cavités dans les moitiés d'insert.

10. Bloc d'insertion selon la revendication 7 ou 8, dans lequel le bloc d'insertion comprend deux inserts (50) dans chaque moitié d'insert, un insert est agencé de façon adjacente à la première extrémité de la moitié d'insert et l'autre insert est agencé de façon adjacente à la deuxième extrémité du bloc d'insertion, et la section du bouchon présentant une section transversale circulaire avec un rayon correspondant au rayon du passage est agencée entre les deux inserts.

11. Bloc d'insertion selon l'une quelconque des revendications 7 à 10, dans lequel le bouchon d'insert (20) présente une première extrémité et une deuxième extrémité et comprend un premier rebord (30) agencé dans la première extrémité et s'étendant dans une direction radiale à partir de l'axe A et un deuxième rebord (30) agencé dans la deuxième extrémité et s'étendant dans une direction radiale à partir de l'axe A, lesdits rebords présentant un rayon correspondant au rayon du passage circulaire formé par l'au moins un insert ou un rayon correspondant au rayon des cavités formées dans la rainure de sorte que le passage à travers l'insert est étanchéifié par le bouchon d'insert.

12. Bloc d'insertion selon la revendication 11, dans lequel la longueur du bouchon d'insert le long de l'axe A est réglable de telle façon que le premier et/ou le deuxième rebord s'ajuste(-nt) dans les cavités adjacentes aux première et deuxième extrémités des moitiés de bloc d'insertion ou entre des éléments adjacents de l'au moins un insert agencés dans la rainure des moitiés d'insert.

13. Système d'étanchéité (1) comprenant :
un cadre (3) agencé dans une paroi de séparation ;
au moins un bloc d'insertion (4) selon la revendication 1 agencé dans le cadre ;
et un dispositif d'application de pression agencé dans le cadre pour appliquer une pression sur l'au moins un bloc d'insertion afin d'étanchéifier l'espace dans le cadre.
